# EUROPEAN PATENT APPLICATION

(11) **EP 1 880 641 A1**
(43) Date of publication of application: **23.01.2008**
(21) Application number: 06722407.1
(22) Date of filing: 26.04.2006
(51) Int. Cl.: A47C 29/00, D02G 3/00, A01N 25/00, D06M 13/00

(54) **INSECT-EXPELLING YARN NET AND METHOD FOR MANUFACTURING THE NET**

(30) Priority: 29.04.2005 CN 200510068207
(71) Applicant: CHEN-CHANG TECHNOLOGY CO., LTD., Kaohsiung Hsien, Taiwan 831 (CN)
(72) Inventor: CHOU, Kuochung, Kaohsiung Hsien, Taiwan 831 (CN)
(74) Representative: Jeannet, Olivier
(86) International application number: PCT/CN2006/000807
(87) International publication number: WO 2006/116918

(57) **Abstract**

An insect-expelling yarn net and a method for manufacturing the net are provided. The insect-expelling yarn net includes a yarn net and an insect-expelling substance. The insect-expelling substance is attached to the yarn net. The method includes steps of: providing a yarn net; providing a solution of an insect-expelling substance; placing the yarn net in the solution; and volatilizing a solvent of the solution so that the insect-expelling substance can be attached to the yarn net. Another method for manufacturing an insect-expelling yarn net is provided. The method includes steps of: providing yarns; providing a solution of an insect-expelling substance; placing the yarns in the solution; volatilizing a solvent of the solution so that the insect-expelling substance can be attached to the yarns; and weaving the yarns into a yarn net.

## Description

### FIELD OF THE INVENTION

The present invention relates to an insect-expelling yarn net and a method for manufacturing the net, and more particularly to an insect-expelling yarn net having an insect-expelling substance and a method for manufacturing the net.

### BACKGROUND OF THE INVENTION

Generally, daily life of human is frequently bothered by various insects, such as mosquito. The insects not only may influence the life quality of human, but also become vectors of infectious diseases. Thus, various appliances of daily life or outdoor life (such as door windows, vehicular windows, or tents) can be installed with a yarn net, in order to solve the bothering problem caused by unwelcome external articles, such as the insects. However, because the volume of the insects is small, the yarn net can not prevent the insects from passing therethrough unless the mesh size of the yarn net is smaller than the volume of the insects. Nevertheless, if the mesh size of the yarn net is too small, it may lower the convection efficiency of indoor airflows. Furthermore, for some applications (such as vehicular windows in consideration of universal installation on various vehicles), the yarn net may not completely cover the vehicular windows, such that the insect-expelling effect can not be efficiently carried out.

To solve the problem of expelling insects, Taiwan Pat. No. 456,454, entitled "insect-capturing/killing door or window structure", discloses a screen window installed with a high-voltage power device or an ultrasonic device for expelling insects. Although the method disclosed by the foregoing prior art provides the insect-expelling effect, the structural design of the high-voltage power device or the ultrasonic device is too complicated, while the manufacture cost thereof is too high, resulting in the inconvenience of consumers.

As a result, it is important to think how to provide a simple solution for expelling insects, in order to satisfy needs of related users.

### SUMMARY OF THE INVENTION

To solve the problems existing in the foregoing prior art, a primary object of the present invention is to provide an insect-expelling yarn net and a method for manufacturing the net, which prevents external articles (such as insects) from bothering daily life or outdoor life, so as to improve the quality of daily life or outdoor life of users.

To achieve the above object, the present invention discloses an insect-expelling yarn net which comprises a yarn net and an insect-expelling substance attached to the yarn net.

Furthermore, the present invention discloses a method for manufacturing an insect-expelling yarn net, which comprises steps of: providing a yarn net; providing a solution of an insect-expelling substance; placing the yarn net in the solution; and volatilizing a solvent of the solution so that the insect-expelling substance can be attached to the yarn net.

Moreover, the present invention discloses an alternative method for manufacturing an insect-expelling yarn net, which comprises steps of: providing yarns; providing a solution of an insect-expelling substance; placing the yarns in the solution; volatilizing a solvent of the solution so that the insect-expelling substance can be attached to the yarns; and weaving the yarns into a yarn net.

The insect-expelling yarn net and the method for manufacturing the net of the present invention can provide a more efficient insect-expelling function to overcome the insect-expelling limitation of the traditional yarn net and to improve the problem that oversized meshes of the traditional yarn net or breaches on a screen window can not prevent insects from passing therethrough. Furthermore, the present invention needs not complicated structural design, while the manufacture method is more convenient and easier.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1A and 1B are a schematic view and a cross-sectional view of an insect-expelling yarn net according to a preferred embodiment of the present invention;
Fig. 1C and 1D are a schematic view and a cross-sectional view of yarns of the insect-expelling yarn net according to another preferred embodiment of the present invention;
Fig. 2A is a flowchart of a method for manufacturing an insect-expelling yarn net according to a first preferred embodiment of the present invention;
Fig. 2B is a flowchart of a method for manufacturing an insect-expelling yarn net according to a second preferred embodiment of the present invention;
Fig. 3 is an assembled perspective view of the insect-expelling yarn net applied to a screen window/door according to the preferred embodiment of the present invention;
Fig. 4 is an assembled perspective view of the insect-expelling yarn net applied to a vehicular screen window according to the preferred embodiment of the present invention;
Fig. 5 is an assembled perspective view of the insect-expelling yarn net applied to a screen window/door of a camping tent according to the preferred embodiment of the present invention; and
Fig. 6 is an assembled perspective view of the insect-expelling yarn net applied to a screen door of a net house of organic crops according to the preferred embodiment of the present invention.

### DETAILED DESCRIPTION OF THE PREFERRED EMBODIMENTS

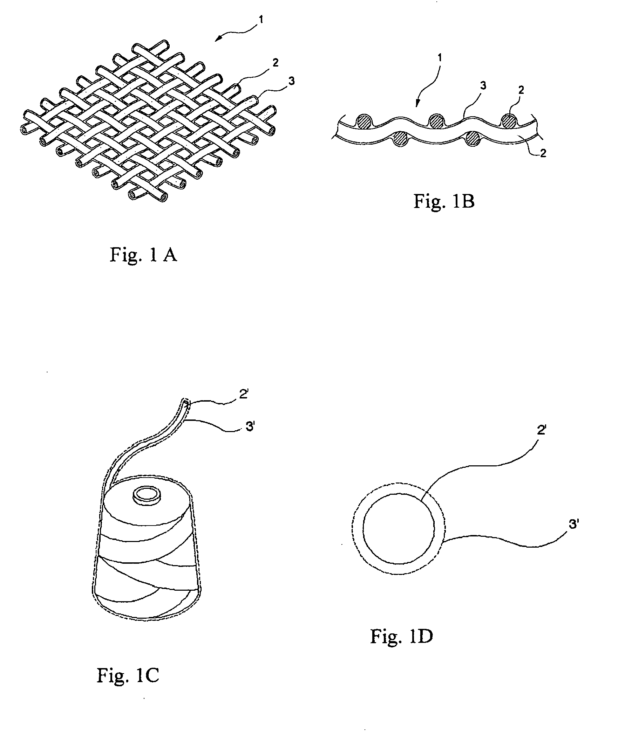

Referring now to Figs. 1A and 1B, an insect-expelling yarn net according to a preferred embodiment of the present invention is illustrated. As shown, the insect-expelling yarn net designated by numeral 1 comprises a yarn net 2 and an insect-expelling substance 3 attached to the yarn net 2. The surface of the yarn net 2 can provide the insect-expelling effect due to the insect-expelling substance 3 attached to the surface. Therefore, the insect-expelling effect of the insect-expelling substance 3 causes to expel insects (such as mosquito) from the insect-expelling yarn net 1 about a certain distance, so that various applications of the insect-expelling yarn net 1 can provide the better insect-expelling effect.

Furthermore, referring now to Figs. 1C and 1D, in another preferred embodiment of the present invention, the insect-expelling yarn net 1 can be woven from yarns 2' which are attached with an insect-expelling substance 3' in advance. The surface of the yarns 2' can provide the insect-expelling effect due to the insect-expelling substance 3' attached to the surface. Therefore, the insect-expelling effect of the insect-expelling substance 3' causes to expel insects (such as mosquito) from the insect-expelling yarn net 1 about a certain distance, so that various applications of the insect-expelling yarn net 1 woven from the yarns 2' can provide the better insect-expelling effect.

The material of the yarns applied to the insect-expelling yarn net of the present invention can be preferably selected from metal material, ceramic material, or polymeric material, wherein the polymeric material can be preferably selected from the group consisting of nylon, polyvinyl chloride (PVC), polypropylene (PP), polybutylene terephthalate (PBT), and poly(ethylene terephthalate) (PET).

The insect-expelling substance applied to the insect-expelling yarn net of the present invention can be preferably selected from the group consisting of cypermethrin, tetramethrin, cyfluthrin, d-allethrin, pyrethrin, diethyl toluamine, piperonyl butoxide, d-tetramethrin, cyphenothrin, pyrethrum preparation, and eucalyptus preparation. According to the efficacy and the expelled insect species, the insect-expelling substance can be classified into several types as the following:

### 1. mosquito-expelling substance:

It can be preferably selected from the group consisting of cypermethrin, tetramethrin, cyfluthrin, d-allethrin, pyrethrin, diethyl toluamine, piperonyl butoxide, d-tetramethrin, cyphenothrin, pyrethrum preparation, and eucalyptus preparation.

### 2. dust-mite-expelling substance:

It can be preferably selected from the group consisting of cypermethrin, pyrethrum preparation, eucalyptus preparation, and diethyl toluamine.

### 3. cockroach-expelling substance:

It can be preferably selected from the group consisting of cypermethrin, tetramethrin, cyfluthrin, d-allethrin, pyrethrin, and pyrethrum preparation.

### 4. ant-expelling substance:

It can be preferably selected from the group consisting of cypermethrin, pyrethrum preparation, and diethyl toluamine.

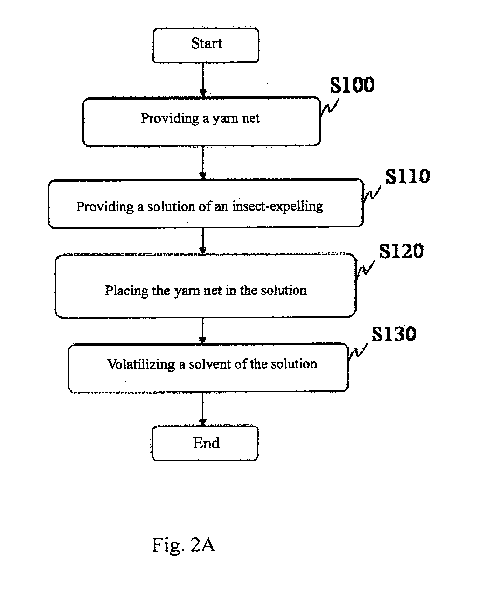

Referring now to Fig. 2A, a flowchart of a method for manufacturing an insect-expelling yarn net according to a first preferred embodiment of the present invention is illustrated. As shown, the method of the first second preferred embodiment comprises steps of: providing a woven yarn net (step S100); providing a solution of an insect-expelling substance, wherein the concentration of the insect-expelling substance is greater than 1wt% (step S110); placing the yarn net in the solution of the insect-expelling substance (step S120); and volatilizing a solvent of the solution so that the insect-expelling substance can be attached to the yarn net (step S130).

In the step of providing the solution of the insect-expelling substance, the insect-expelling substance is added into water to prepare the solution having the concentration of the insect-expelling substance greater than 1wt%, and preferably between 2wt% and 10wt%. If necessary, the concentration of the insect-expelling substance can be higher than said percentages. Optionally, a resin material (about 20wt%) is further added into the solution by a sol-gel process, wherein the resin material can be preferably selected from silica gel or polyurethane (PU) resin. The resin material can encapsulate the insect-expelling substance to form microcapsules, so as to reduce the release speed of the insect-expelling substance, for the purpose of providing a long-term effective insect-expelling yarn net.

In the step of placing the yarn net in the solution of the insect-expelling substance, the insect-expelling substance can be attached to the yarn net by spraying, coating, or immersing.

In the step of volatilizing the solvent of the solution, the solvent can be volatilized by naturally volatilizing, hot-air volatilizing, or hot rolling.

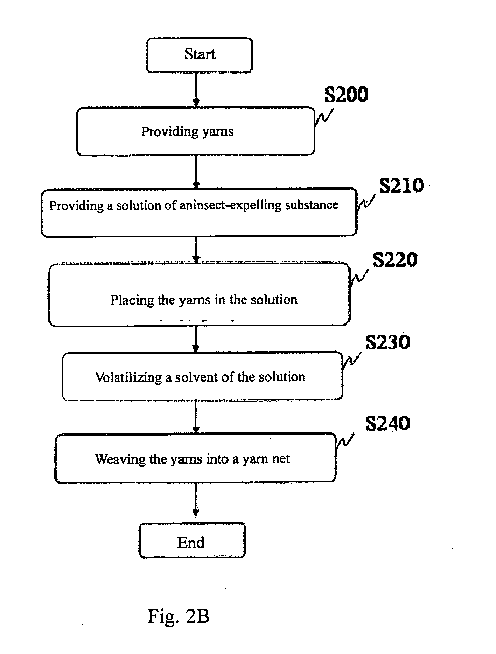

Moreover, referring now to Fig. 2B, a flowchart of a method for manufacturing an insect-expelling yarn net according to a second preferred embodiment of the present invention is illustrated. As shown, the method of the second preferred embodiment comprises steps of: providing yarns (step S200); providing a solution of an insect-expelling substance, wherein the concentration of the insect-expelling substance is greater than 1wt% (step S210); placing the yarns in the solution of the insect-expelling substance (step S220); volatilizing a solvent of the solution so that the insect-expelling substance can be attached to the yarns (step S230); and weaving the yarns into a yarn net (step S240).

In the step of providing the solution of the insect-expelling substance, the insect-expelling substance is added into water to prepare the solution having the concentration of the insect-expelling substance greater than 1wt%, and preferably between 2wt% and 10wt%. Optionally, a resin material (about 20wt%) is further added into the solution by a sol-gel process, wherein the resin material can be preferably selected from silica gel or polyurethane (PU) resin. The resin material can encapsulate the insect-expelling substance to form microcapsules, so as to reduce the release speed of the insect-expelling substance, for the purpose of providing the woven yarn net as a long-term effective insect-expelling yarn net.

In the step of placing the yarns in the solution of the insect-expelling substance, the insect-expelling substance can be attached to the yarns by spraying, coating, or immersing.

In the step of volatilizing the solvent of the solution, the solvent can be volatilized by naturally volatilizing, hot-air volatilizing, or hot rolling.

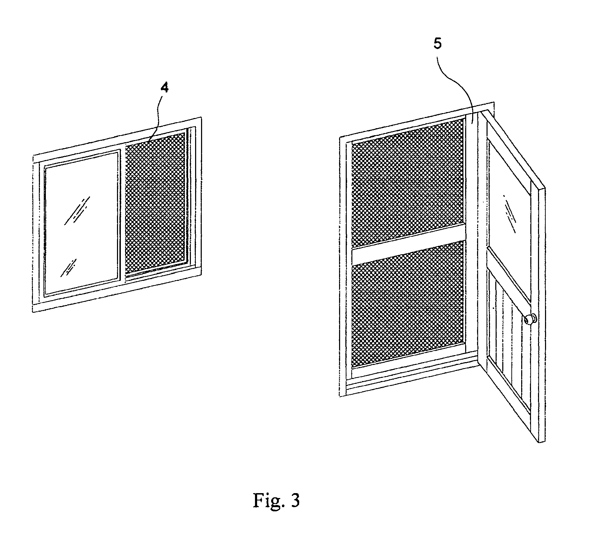

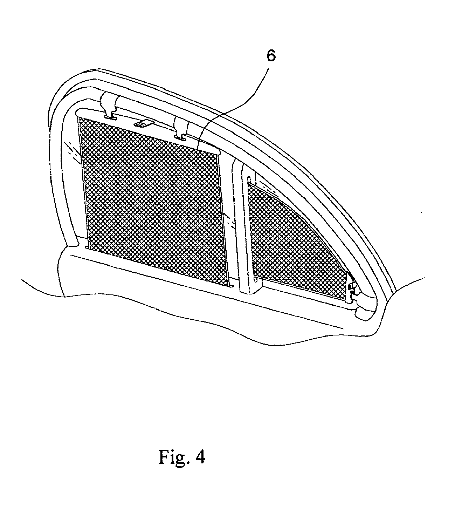

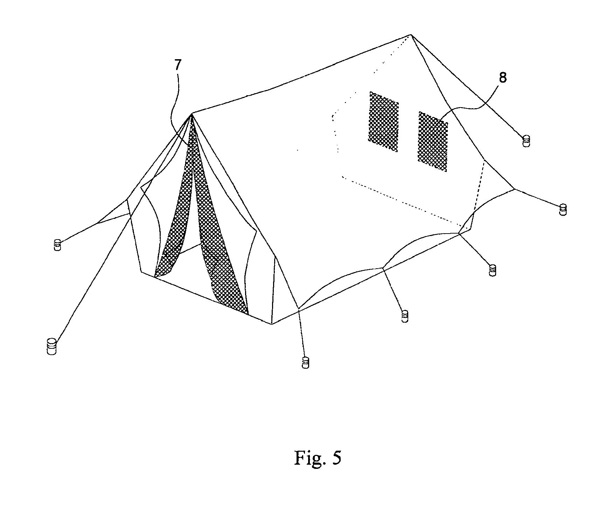

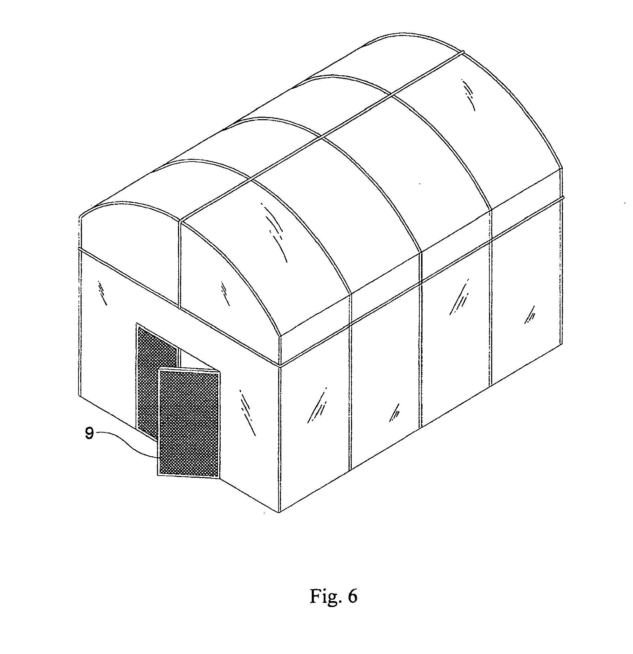

Referring now to Figs. 3, 4, 5, and 6, in various preferred embodiments of the present invention, the insect-expelling yarn net can be applied to a screen window 4, a screen door 5, a vehicular screen window 6, a screen door 7 or a screen window 8 of a camping tent, or a screen door 9 of a net house of organic crops. In addition, various appliances of daily life or outdoor life can be installed with the yarn net of the present invention, so as to expel various unwelcome pests (such as insects), for the purpose of improving the quality of daily life or outdoor life.

As described above, the insect-expelling yarn net and the method for manufacturing the net of the present invention can provide the insect-expelling function by the yarn net. Furthermore, the structure of the yarn net is simpler, while the manufacture method is easier. In comparison with the traditional yarn net, the yarn net of the present invention can a more efficient insect-expelling function.

The present invention has been described with a preferred embodiment thereof and it is understood that many changes and modifications to the described embodiment can be carried out without departing from the scope and the spirit of the invention that is intended to be limited only by the appended claims.

## Claims

1. A insect-expelling yarn net, comprising:
a yarn net; and
an insect-expelling substance attached to the yarn net.

2. The insect-expelling yarn net of claim 1, wherein the material of the yarn net is selected from metal material, ceramic material, or polymeric material.

3. The insect-expelling yarn net of claim 2, wherein the polymeric material is selected from the group consisting of nylon, polyvinyl chloride, polypropylene, polybutylene terephthalate, and poly(ethylene terephthalate).

4. The insect-expelling yarn net of claim 1, wherein the insect-expelling substance is selected from the group consisting of cypermethrin, tetramethrin, cyfluthrin, d-allethrin, pyrethrin, diethyl toluamine, piperonyl butoxide, d-tetramethrin, cyphenothrin, pyrethrum preparation, and eucalyptus preparation.

5. The insect-expelling yarn net of claim 1, wherein a mosquito-expelling substance in the insect-expelling substance is selected from the group consisting of cypermethrin, tetramethrin, cyfluthrin, d-allethrin, pyrethrin, diethyl toluamine, piperonyl butoxide, d-tetramethrin, cyphenothrin, pyrethrum preparation, and eucalyptus preparation.

6. The insect-expelling yarn net of claim 1, wherein a dust-mite-expelling substance in the insect-expelling substance is selected from the group consisting of cypermethrin, pyrethrum preparation, eucalyptus preparation, and diethyl toluamine.

7. The insect-expelling yarn net of claim 1, wherein a cockroach-expelling substance in the insect-expelling substance is selected from the group consisting of cypermethrin, tetramethrin, cyfluthrin, d-allethrin, pyrethrin, and pyrethrum preparation.

8. The insect-expelling yarn net of claim 1, wherein an ant-expelling substance in the insect-expelling substance is selected from the group consisting of cypermethrin, pyrethrum preparation, and diethyl toluamine.

9. The insect-expelling yarn net of claim 1, wherein the insect-expelling yarn net is applied to a screen window, a screen door, a vehicular screen window, a screen door or a screen window of a camping tent, or a screen door of a net house of organic crops.

10. A method for manufacturing an insect-expelling yarn net, comprising steps of:
providing a yarn net;
providing a solution of an insect-expelling substance;
placing the yarn net in the solution; and
volatilizing a solvent of the solution so that the insect-expelling substance can be attached to the yarn net.

11. The method for manufacturing the insect-expelling yarn net of claim 10, wherein the material of the yarn net is selected from metal material, ceramic material, or polymeric material.

12. The method for manufacturing the insect-expelling yarn net of claim 11, wherein the polymeric material is selected from the group consisting of nylon, polyvinyl chloride, polypropylene, polybutylene terephthalate, and poly(ethylene terephthalate).

13. The method for manufacturing the insect-expelling yarn net of claim 10, wherein the insect-expelling substance is selected from the group consisting of cypermethrin, tetramethrin, cyfluthrin, d-allethrin, pyrethrin, diethyl toluamine, piperonyl butoxide, d-tetramethrin, cyphenothrin, pyrethrum preparation, and eucalyptus preparation.

14. The method for manufacturing the insect-expelling yarn net of claim 10, wherein a mosquito-expelling substance in the insect-expelling substance is selected from the group consisting of cypermethrin, tetramethrin, cyfluthrin, d-allethrin, pyrethrin, diethyl toluamine, piperonyl butoxide, d-tetramethrin, cyphenothrin, pyrethrum preparation, and eucalyptus preparation.

15. The method for manufacturing the insect-expelling yarn net of claim 10, wherein a dust-mite-expelling substance in the insect-expelling substance is selected from the group consisting of cypermethrin, pyrethrum preparation, eucalyptus preparation, and diethyl toluamine.

16. The method for manufacturing the insect-expelling yarn net of claim 10, wherein a cockroach-expelling substance in the insect-expelling substance is selected from the group consisting of cypermethrin, tetramethrin, cyfluthrin, d-allethrin, pyrethrin, and pyrethrum preparation.

17. The method for manufacturing the insect-expelling yarn net of claim 10, wherein an ant-expelling substance in the insect-expelling substance is selected from the group consisting of cypermethrin, pyrethrum preparation, and diethyl toluamine.

18. The method for manufacturing the insect-expelling yarn net of claim 10, wherein the step of providing the solution of the insect-expelling substance further comprises: adding the insect-expelling substance into the solvent to prepare the solution having the concentration of the insect-expelling substance greater than 1wt%.

19. The method for manufacturing the insect-expelling yarn net of claim 10, wherein the step of providing the solution of the insect-expelling substance further comprises: adding the insect-expelling substance into the solvent to prepare the solution having the concentration of the insect-expelling substance between 2wt% and 10wt%.

20. The method for manufacturing the insect-expelling yarn net of claim 18 or 19, wherein the solvent is water.

21. The method for manufacturing the insect-expelling yarn net of claim 18 or 19, wherein the step of providing the solution of the insect-expelling substance further comprises a sol-gel process for adding a resin material about 20wt% into the solution, so that the resin material encapsulates the insect-expelling substance to form microcapsules.

22. The method for manufacturing the insect-expelling yarn net of claim 21, wherein the resin material is selected from silica gel or PU resin.

23. The method for manufacturing the insect-expelling yarn net of claim 10, wherein the step of placing the yarn net in the solution of the insect-expelling substance further comprises: attaching the insect-expelling substance to the yarn net by spraying, coating, or immersing.

24. The method for manufacturing the insect-expelling yarn net of claim 10, wherein the step of volatilizing the solvent of the solution further comprises: volatilizing the solvent by naturally volatilizing, hot-air volatilizing, or hot rolling.

25. The method for manufacturing the insect-expelling yarn net of claim 10, wherein the insect-expelling yarn net is applied to a screen window, a screen door, a vehicular screen window, a screen door or a screen window of a camping tent, or a screen door of a net house of organic crops.

26. A method for manufacturing an insect-expelling yarn net, comprising steps of:
providing yarns;
providing a solution of an insect-expelling substance;
placing the yarns in the solution;
volatilizing a solvent of the solution so that the insect-expelling substance can be attached to the yarns; and
weaving the yarns into a yarn net.

27. The method for manufacturing the insect-expelling yarn net of claim 26, wherein the material of the yarns is selected from metal material, ceramic material, or polymeric material.

28. The method for manufacturing the insect-expelling yarn net of claim 27, wherein the polymeric material is selected from the group consisting of nylon, polyvinyl chloride, polypropylene, polybutylene terephthalate, and poly(ethylene terephthalate).

29. The method for manufacturing the insect-expelling yarn net of claim 26, wherein the insect-expelling substance is selected from the group consisting of cypermethrin, tetramethrin, cyfluthrin, d-allethrin, pyrethrin, diethyl toluamine, piperonyl butoxide, d-tetramethrin, cyphenothrin, pyrethrum preparation, and eucalyptus preparation.

30. The method for manufacturing the insect-expelling yarn net of claim 26, wherein a mosquito-expelling substance in the insect-expelling substance is selected from the group consisting of cypermethrin, tetramethrin, cyfluthrin, d-allethrin, pyrethrin, diethyl toluamine, piperonyl butoxide, d-tetramethrin, cyphenothrin, pyrethrum preparation, and eucalyptus preparation.

31. The method for manufacturing the insect-expelling yarn net of claim 26, wherein a dust-mite-expelling substance in the insect-expelling substance is selected from the group consisting of cypermethrin, pyrethrum preparation, eucalyptus preparation, and diethyl toluamine.

32. The method for manufacturing the insect-expelling yarn net of claim 26, wherein a cockroach-expelling substance in the insect-expelling substance is selected from the group consisting of cypermethrin, tetramethrin, cyfluthrin, d-allethrin, pyrethrin, and pyrethrum preparation.

33. The method for manufacturing the insect-expelling yarn net of claim 26, wherein an ant-expelling substance in the insect-expelling substance is selected from the group consisting of cypermethrin, pyrethrum preparation, and diethyl toluamine.

34. The method for manufacturing the insect-expelling yarn net of claim 26, wherein the step of providing the solution of the insect-expelling substance further comprises: adding the insect-expelling substance into the solvent to prepare the solution having the concentration of the insect-expelling substance greater than 1wt%.

35. The method for manufacturing the insect-expelling yarn net of claim 26, wherein the step of providing the solution of the insect-expelling substance further comprises: adding the insect-expelling substance into the solvent to prepare the solution having the concentration of the insect-expelling substance between 2wt% and 10wt%.

36. The method for manufacturing the insect-expelling yarn net of claim 34 or 35, wherein the solvent is water.

37. The method for manufacturing the insect-expelling yarn net of claim 34 or 35, wherein the step of providing the solution of the insect-expelling substance further comprises a sol-gel process for adding a resin material about 20wt% into the solution, so that the resin material encapsulates the insect-expelling substance to form microcapsules.

38. The method for manufacturing the insect-expelling yarn net of claim 37, wherein the resin material is selected from silica gel or PU resin.

39. The method for manufacturing the insect-expelling yarn net of claim 26, wherein the step of placing the yarns in the solution of the insect-expelling substance further comprises: attaching the insect-expelling substance to the yarns by spraying, coating, or immersing.

40. The method for manufacturing the insect-expelling yarn net of claim 26, wherein the step of volatilizing the solvent of the solution further comprises: volatilizing the solvent by naturally volatilizing, hot-air volatilizing, or hot rolling.

41. The method for manufacturing the insect-expelling yarn net of claim 26, wherein the insect-expelling yarn net is applied to a screen window, a screen door, a vehicular screen window, a screen door or a screen window of a camping tent, or a screen door of a net house of organic crops.
